# EUROPEAN PATENT APPLICATION

(11) **EP 4 822 933 A2**
(43) Date of publication of application: **14.10.2026**
(21) Application number: 26201691.8
(22) Date of filing: 28.08.2026
(51) Int. Cl.: H02J 3/0014

(54) **METHOD FOR PREDICTING GRID-CONNECTED OSCILLATION CONDITIONS OF POWER STATION BASED ON FREQUENCY-DOMAIN STABILITY ANALYSIS, AND STORAGE MEDIUM**

(30) Priority: 02.03.2026 CN 202610244598
(71) Applicant: Shanghai KeLiang Information Technology Co., Ltd., Shanghai 201103 (CN)
(72) Inventor:
(74) Representative: Balder IP Law, S.L.

(57) **Abstract**

The present invention relates to a method for predicting grid-connected oscillation conditions of a power station based on frequency-domain stability analysis, a storage medium, and a system. By establishing an admittance database and an accurate station frequency-domain model, and screening the optimal initial operating condition in combination with negative damping characteristics, the problem of unreasonable initial operating condition selection and large prediction deviation in the existing technologies is solved at the source, achieving a significant improvement in the prediction accuracy of oscillation conditions and effectively avoiding power grid safety hazards caused by inaccurate prediction. By quantifying the influence coefficients of parameters on the stability margin to lock the key parameter set, the drawbacks of low efficiency of full-parameter traversal and loss of information due to unweighted dimension reduction in the existing technologies are abandoned. While greatly reducing the computational load and improving prediction efficiency, the prediction accuracy is ensured to be unaffected, meeting the actual needs of real-time prediction and rapid response in engineering sites, and significantly improving the engineering practicability of the solution.

## Description

### TECHNICAL FIELD

The present invention relates to the field of power system stability analysis, and in particular, to a method for predicting grid-connected oscillation conditions of a power station based on frequency-domain stability analysis, and a storage medium.

### BACKGROUND

As the global energy structure transitions towards clean and low-carbon sources, large-scale grid connection of renewable energy power stations such as wind farms, photovoltaic plants, and energy storage power stations has become a core trend in the construction of new-type power systems. As the proportion of renewable energy generation in power systems continues to rise, the renewable energy generation gradually becomes an important pillar of power supply. However, core equipment of renewable energy power stations (such as inverters) feature strong nonlinear characteristics, low inertia, and weak damping. Moreover, during the grid-connection process, power stations face complex scenarios such as multi-equipment coordination, power grid load fluctuations, and random changes in weather factors (e.g., wind speed, light intensity), leading to frequent grid-connected oscillation issues, which severely threaten safe and stable operation of the power grid and efficient utilization of renewable energy.

As a typical risk in the grid-connected operation of renewable energy power stations, grid-connected oscillations may cause equipment overcurrent, overvoltage, unit tripping, and other faults, and even spread to an entire regional power grid, causing large-scale blackouts. Therefore, accurately and efficiently predicting grid-connected oscillation operating conditions of power stations, identifying oscillation risks in advance, and locating the root causes of oscillations have become key technical requirements for ensuring the safe and stable operation of new-type power systems.

At present, various technologies related to predicting grid-connected oscillation operating conditions of renewable energy power stations have emerged in the industry. However, these technologies still have many shortcomings and fail to effectively solve the core challenges in practical engineering applications, making it difficult to meet the refined and efficient prediction requirements in the context of high-penetration renewable energy grid connection. The specific limitations are as follows.

First, oscillation operating condition coverage is incomplete, and a problem of risk omission is prominent. Existing prediction methods mostly focus on a single type of oscillation or preset typical risk scenarios. They do not fully consider coupling effects of complex factors such as multi-equipment coordination, changes in power grid operation modes, and load random changes in renewable energy power stations. They cannot cover all potential oscillation operating condition combinations under multi-equipment and multi-condition fluctuations, leading to easy omission of key risk scenarios and insufficient comprehensiveness of prediction results, and fail to provide all-round support for power grid safety control.

Second, prediction efficiency is low, and engineering practicability is poor. There are many influencing factors for grid-connected oscillation operating conditions of renewable energy power stations, involving multiple parameters such as device parameters, power grid parameters, and operating condition parameters, resulting in high parameter dimensions. Existing prediction methods mostly adopt full-parameter traversal or unweighted dimension reduction for condition optimization and prediction. The full-parameter traversal method leads to a sharp increase in computational load and low prediction efficiency, while the unweighted dimension reduction method easily loses key parameter information, affecting prediction accuracy. Neither method can balance prediction efficiency and prediction accuracy, making it difficult to meet the actual needs of prediction and rapid response in engineering sites.

Finally, prediction results are incomplete, and the root causes of oscillations are difficult to locate. Most existing prediction technologies can only output basic prediction results of oscillation risks, such as oscillation warning signals and risk levels. They do not establish a complete "oscillation result - operating condition parameter - influence mechanism" association chain, cannot clarify the quantitative relationship between different operating condition parameters and oscillation results, nor can they locate the core operating condition parameters that cause oscillation. As a result, operation and maintenance personnel can only know that there is an oscillation risk but cannot accurately determine the root causes of oscillations, making it difficult to take targeted prevention and control measures, and fail to fundamentally reduce the probability of oscillation events.

In summary, the existing technologies for predicting grid-connected oscillation operating conditions of renewable energy power stations have core challenges such as incomplete oscillation operating condition coverage, low prediction efficiency, and incomplete prediction results. They are difficult to adapt to the needs of safe and stable operation of new-type power systems in the context of high-penetration renewable energy grid connection. Therefore, developing a method for predicting grid-connected oscillation operating conditions of a power station that can solve the above challenges and balance prediction comprehensiveness, efficiency, and completeness has become an urgent technical problem to be solved in the field of power system oscillation.

### SUMMARY

To solve the above technical problems, the embodiments of the present invention provide a method for predicting grid-connected oscillation operating conditions of a power station based on frequency-domain stability analysis, including:
S1: establishing an admittance database and constructing a frequency-domain model of the power station, where the admittance database is configured to record a negative damping level of each device in the power station;
S2: according to the negative damping level of each device in the admittance database and the frequency-domain model, selecting an operating condition having the highest negative damping level and being stable as a present initial operating condition;
S3: based on the frequency-domain model, calculating an influence coefficient of each parameter of each device on a stability margin under the present initial operating condition, and determining a key parameter set according to the influence coefficients;
S4: for a respective key parameter in the key parameter set, calculating a system stability margin under different adjustment strategies applied to the respective key parameter to obtain candidate adjustment strategies with a decreased stability margin; and among the candidate adjustment strategies, selecting an adjustment strategy with the largest stability margin decline gradient as a present adjustment strategy;
S5: according to the present adjustment strategy, continuously adjusting each parameter in the key parameter set with an adjustment step, determining whether each updated operating condition is stable, if yes, performing no processing, if no, outputting an oscillation operating condition, until reaching a boundary of any key parameter; deleting the present adjustment strategy from the candidate adjustment strategies, returning to operation S4 to reselect the adjustment strategy with the largest stability margin decline gradient as a present adjustment strategy; until all candidate adjustment strategies are traversed.

In some embodiments, operation S2 includes:
S21: according to admittance data of each device in the admittance database, calculating a negative damping interval area of each device;
S22: according to the negative damping interval area of each device, integrating capacity weights of devices in the power station, and weighting to determine the negative damping level of each operating condition;
S23: arranging the operating conditions in a descending order according to the negative damping level of the operating conditions; determining whether the present operating condition is stable in order, if stable, taking the present operating condition as the present initial operating condition; if oscillating, outputting the present operating condition as an oscillation operating condition, and in the descending order, setting a next operating condition after the present operating condition as the present operating condition, performing stability determination again, until the operating condition with the largest negative damping level and being stable is obtained as the present initial operating condition.

In some embodiments, calculating the influence coefficient of each parameter of each device on the stability margin includes:
S31: calculating a participation factor of each device in the power station under the present operating condition, and determining a global weight of each device affecting the stability margin;
S32: under the present operating condition, adjusting only a single parameter of a single device each time, determining a local weight of each parameter adjustment affecting the stability margin;
S33: according to the global weight of each device and the local weight of each parameter, calculating the influence coefficient of each parameter of each device on the stability margin.

In some embodiments, operation S32 includes:
S321: setting an adjustment step of a parameter, and respectively adjusting a single parameter of a single device according to the set adjustment step in both increase and decrease directions, keeping other parameters unchanged, to obtain a positively updated operating condition under an increase direction adjustment and a negatively updated operating condition under a decrease direction adjustment;
S322: performing a stability modal analysis on the positively updated operating condition and the negatively updated operating condition respectively, determining a stability margin of the positively updated operating condition and a stability margin of the negatively updated operating condition;
S323: according to a ratio of a difference between the stability margin of the positively updated operating condition and the stability margin of the negatively updated operating condition to twice the adjustment step, determining the local weight of each parameter adjustment affecting the stability margin.

In some embodiments, setting the adjustment step of the parameter includes:
S3211: according to a numerical adjustment range of each parameter, determining an adjustment step threshold for each parameter;
S3212: according to the adjustment step threshold of each parameter, determining a first step and a second step for each parameter adjustment; where the second step is twice the first step, and the second step does not exceed the adjustment step threshold;
S3213: adjusting a corresponding parameter with the first step and the second step of each parameter respectively, obtaining stability margin change rates under the first step adjustment and the second step adjustment;
S3214: determining whether a change between the stability margin change rate under the second step adjustment and the stability margin change rate under the first step adjustment is less than a set threshold, if yes, setting the first step as the adjustment step of the parameter; if no, returning to operation S3212, and re-determining the first step and the second step for each parameter adjustment in a decrease direction.

In some embodiments, operation S32 further includes:
S320: equally setting a plurality of adjustment steps between the first step and the second step; under each set adjustment step, sequentially performing operations S321 - S323 to obtain the local weight of each parameter under each adjustment step;
S324: according to the local weight of each parameter under each adjustment step, weighting to determine a final local weight of each parameter.

In some embodiments, a calculation formula for weighting to determine the final local weight of each parameter is: ${w}_{ij}^{"} = {\sum }_{d = 1}^{D} {w}_{ij}^{d} \times {α}_{ij}^{d} \times {β}_{ij}^{d} \times {γ}_{ij}^{d} ;$ ${α}_{ij}^{d} = \frac{{ΔA}_{ij}^{d}}{{\sum }_{d = 1}^{D} {ΔA}_{ij}^{d}} ;$ ${β}_{ij}^{d} = \frac{{ΔA}_{ij}^{max} - {ΔA}_{ij}^{d}}{{ΔA}_{ij}^{max} - {ΔA}_{ij}^{min}} ;$ ${γ}_{ij}^{d} = \frac{{w}_{ij}^{d}}{{\sum }_{d = 1}^{D} {w}_{ij}^{d}} ;$ where wᵢ^{'}ⱼ^{'} is the final local weight of the j-th parameter of the i-th device, wᵢ^{d}ⱼ is the local weight of the j-th parameter of the i-th device calculated under the d-th set adjustment step, αᵢ^{d}ⱼ is a basic coefficient of the d-th set adjustment step, βᵢ^{d}ⱼ is a safety coefficient of the d-th set adjustment step, γᵢ^{d}ⱼ is a contribution coefficient of the d-th set adjustment step, ΔA^{d}ᵢⱼ is the d-th adjustment step of the j-th parameter of the i-th device, ${ΔA}_{ij}^{max}$ is the maximum adjustment step of the j-th parameter of the i-th device, and ${ΔA}_{ij}^{min}$ is the minimum adjustment step of the j-th parameter of the i-th device.

In some embodiments, determining the key parameter set according to the influence coefficients includes:
S34: arranging the influence coefficients of each parameter of each device on the stability margin in a descending order; and calculating a sum of influence coefficients of all parameters of all devices as a global influence coefficient;
S35: selecting the first M' parameters to construct a preliminary key parameter set, and calculating the sum of influence coefficients of all parameters in the preliminary key parameter set as a local influence coefficient;
S36: determining whether a ratio of the local influence coefficient to the global influence coefficient exceeds a set threshold, if yes, taking the preliminary key parameter set as the final key parameter set; if no, updating M' to M'+1, and returning to operation S35.

In some embodiments, operation S4 includes:
S41: performing a small-step numerical adjustment on each key parameter in different adjustment directions, calculating a corresponding stability margin variation, to construct a training data set;
S42: taking a numerical variation of each key parameter in the training data set as input and the stability margin variation as output, constructing a stability margin gradient prediction model to predict the stability margin decline gradient of each key parameter under different adjustment directions;
S43: according to the prediction result, determining the adjustment strategy with the largest stability margin decline gradient as the present adjustment strategy.

In some embodiments, the stability margin gradient prediction model includes: an input layer, a first hidden layer, a second hidden layer, a third hidden layer, and an output layer connected in sequence;
the input layer is configured to input a numerical variation of each device parameter in a candidate parameter set;
the first hidden layer is configured to focus on a mapping relationship between a single parameter variation and the stability margin variation, extracting linear correlation features and nonlinear sensitivity features of the single parameter, to obtain original features;
the second hidden layer is configured to, according to the original features, mine synergistic gain and suppression effect of different key parameter adjustment combinations on the stability margin variation, extracting first-order interaction coupling features between parameters;
the third hidden layer is configured to fuse the original features and the first-order coupling features, expanding the feature expression dimension, and extracting high-order nonlinear coupling features between key parameters;
the output layer is configured to output the stability margin variation according to the high-order nonlinear coupling features.

In some embodiments, establishing the admittance database includes: S11: for power electronic devices in the power station, performing multi-condition sweep frequency tests to obtain admittance data under various operating conditions, and establishing the admittance database, to construct a "operating condition - admittance" mapping model.

In some embodiments, operation S11 includes:
for the power electronic devices in the power station, adopting a data-driven modeling form, performing frequency sweep on the power electronic devices under typical operating conditions, obtaining the admittance data under the typical operating conditions, and establishing the admittance database; and
according to the admittance database, constructing the "operating condition - admittance" mapping model with operating condition parameters and frequency as inputs and admittance magnitude and admittance phase as outputs.

In some embodiments, the admittance data includes positive sequence admittance, positive sequence coupled admittance, negative sequence admittance, and negative sequence coupled admittance.

In some embodiments, constructing the station frequency-domain model includes:
adopting mechanism modeling for passive devices in the power station to construct a mechanism model; and
based on the mapping model and the mechanism model, combining topological relationships, assembling and constructing the frequency-domain model of the power station.

In another aspect, the present invention further provides a computer storage medium for storing executable program code; the executable program code is used for performing any of the above methods for predicting grid-connected oscillation operating conditions of a power station.

In another aspect, the present invention further provides a computer system, including a memory and a processor; the memory stores program code executable by the processor; the program code is used for executing any of the above methods for predicting grid-connected oscillation operating conditions of a power station.

The present invention relates to a method for predicting grid-connected oscillation operating conditions of a power station based on frequency-domain stability analysis, and a storage medium. By establishing an admittance database and an accurate station frequency-domain model, and screening an optimal initial operating condition in combination with negative damping characteristics, a problem of unreasonable initial operating condition selection and large prediction deviation in the existing technologies is solved at the source, achieving a significant improvement in the prediction accuracy of oscillation conditions and effectively avoiding power grid safety hazards caused by inaccurate prediction. By quantifying the influence coefficients of parameters on the stability margin to lock the key parameter set, drawbacks of low efficiency of full-parameter traversal and loss of information due to unweighted dimension reduction in the existing technologies are abandoned. While greatly reducing the computational load and improving prediction efficiency, the prediction accuracy is ensured to be unaffected, meeting actual needs of real-time prediction and rapid response in engineering sites, and significantly improving the engineering practicability of the solution.

### BRIEF DESCRIPTION OF THE DRAWINGS

FIG. 1 is a flow chart of a method for predicting grid-connected oscillation conditions of a power station according to an embodiment of the present invention.
FIG. 2 is a schematic diagram of operating condition encoding of a power station according to an embodiment of the present invention.
FIG. 3 is a schematic diagram of a negative damping interval area according to an embodiment of the present invention.

### DESCRIPTION OF THE EMBODIMENTS

The technical solutions in the embodiments of the present invention will be clearly and completely described below with reference to the accompanying drawings in the embodiments of the present invention. Obviously, the described embodiments are only part of the embodiments of the present invention, rather than all of the embodiments. Based on the embodiments of the present invention, all other embodiments obtained by ordinary skill in the art without creative work shall fall within the scope of protection of the present invention.

It should be noted that if directional indications are involved in the embodiments of the present invention, such as up, down, left, right, front, back, and the like, such directional indications are only used to explain the relative positional relationship, movement conditions, and the like of components under a specific posture. If the specific posture changes, the directional indication also changes accordingly. In addition, if descriptions such as "first, second", "S1, S2", "operation one, operation two" are involved in the embodiments of the present invention, such descriptions are only for descriptive purposes and cannot be understood as indicating or implying the relative importance or implicitly indicating the number of technical features indicated or the execution order of the method. Those skilled in the art can understand that anything that does not violate the gist of the invention under the inventive technical concept should be included in the scope of protection of the present invention.

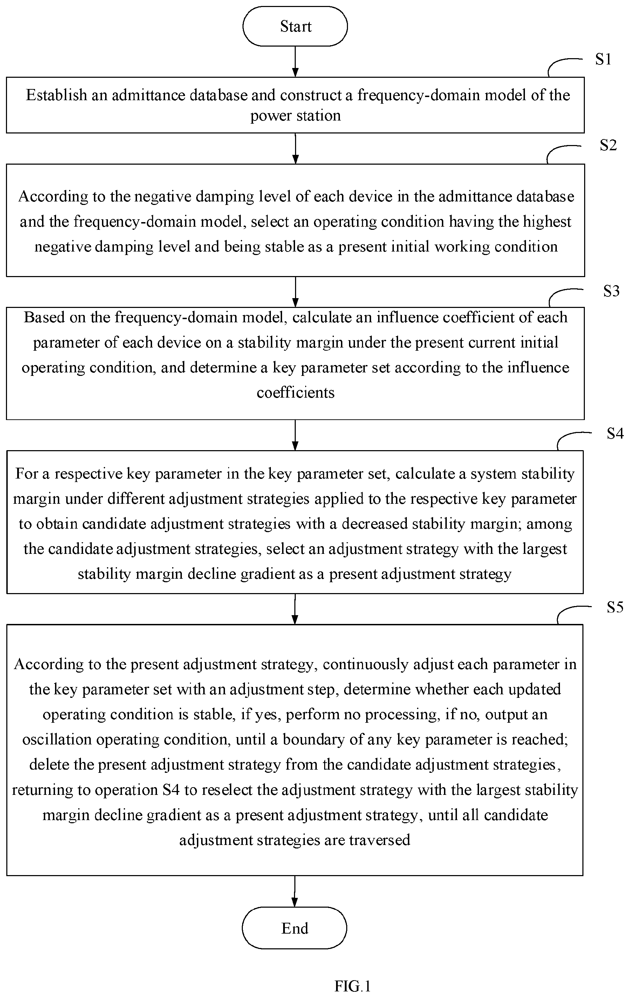

As shown in FIG. 1, an embodiment of the present invention provides a method for predicting grid-connected oscillation conditions of a power station based on frequency-domain stability analysis, including:
S1: establishing an admittance database and constructing a station frequency-domain model.

Specifically, the admittance database is established through simulation according to components and connection relationships contained in the present power station to be predicted, and a station frequency-domain model is constructed.

Operation S1 optionally includes:
S11: for power electronic devices in the power station, performing multi-condition sweep frequency tests to obtain admittance data under various operating conditions, and establishing an admittance database, to construct a "operating condition - admittance" mapping model.

Specifically, the power electronic devices include, but are not limited to, devices with active regulation of electrical energy parameters such as wind turbine converters, photovoltaic inverters, power conversion systems, Static Synchronous Compensator (STATCOM), and the like. More specifically, the admittance data includes, but is not limited to, positive sequence admittance, positive sequence coupled admittance, negative sequence admittance, and negative sequence coupled admittance under various operating conditions.

More specifically, operation S11 includes:
S111: for the power electronic devices in the power station, adopting a data-driven modeling form, performing frequency sweep on the power electronic devices under typical operating conditions (operating condition parameters: output active power, and reactive power), obtaining positive sequence admittance, positive sequence coupled admittance, negative sequence admittance, and negative sequence coupled admittance of the devices under the typical operating conditions, and establishing the admittance database.

Specifically, when a positive-sequence voltage disturbance at a disturbance frequency fₚ is injected, the device port generates current responses at the disturbance frequency fₚ and the coupling frequency fₚ - 2f₁ , and expressions for positive sequence admittance Yₚₚ(s) and positive sequence coupled admittance Yₚₙ(s) are obtained as: ${Y}_{pp} \left(s\right) = \frac{{\hat{ι}}_{p} \left(s\right)}{{\hat{v}}_{p} \left(s\right)} , {Y}_{pn} \left(s\right) = \frac{{\hat{ι}}_{n} \left(s-2{s}_{1}\right)}{{\hat{v}}_{p} \left(s\right)} ;$ where îₚ(s) is the positive-sequence current response at the disturbance frequency, v̂ₚ(s) is the positive-sequence voltage disturbance, îₙ(s - 2s₁) is the negative-sequence current response at the coupling frequency; s = j2πfₚ, s₁ = j2πf₁; fₚ is the disturbance frequency; f₁ is the fundamental frequency.

When a negative-sequence voltage disturbance at a disturbance frequency fₚ is injected, the device port generates current responses at the disturbance frequency fₚ and the coupling frequency fₚ + 2f₁, and expressions for negative sequence admittance Yₙₙ(s) and negative sequence coupled admittance Yₙₚ(s) are obtained as: ${Y}_{nn} \left(s\right) = \frac{{\hat{ι}}_{p} \left(s\right)}{{\hat{v}}_{n} \left(s\right)} , {Y}_{np} \left(s\right) = \frac{{\hat{ι}}_{p} \left(s+2{s}_{1}\right)}{{\hat{v}}_{n} \left(s\right)} ;$ where îₙ(s) is the negative-sequence current response at the disturbance frequency, v̂ₙ(s) is the negative-sequence voltage disturbance, îₚ(s + 2s₁) is the positive-sequence current response at the coupling frequency.

Preferably, establishing the admittance database may further include: preprocessing the collected operating condition admittance data, which includes: outlier removal, data partitioning, and the like. For example, partitioning the collected operating condition admittance data into a training set and a test set in proportion, the training set is used for subsequent model training, and the test set is used for subsequent model accuracy verification.

Operation S11 further includes: S112, according to the admittance database, constructing the "operating condition - admittance" mapping model with operating condition parameters and frequency as inputs and admittance magnitude and admittance phase as outputs.

Specifically, using operating condition parameters and frequency as inputs, and admittance magnitude and admittance phase as outputs, an artificial intelligence algorithm is used to construct a device admittance database model. Using the admittance database, the model is optimized through cross-validation to ensure the fitting accuracy of the model under different operating conditions. Thus, the "operating condition - admittance" mapping model of the power electronic device is constructed.

More specifically, in combination with the nonlinear correlation characteristics between operating condition parameters and admittance data, a suitable model algorithm is selected to construct the "operating condition - admittance" mapping model, preferably an algorithm that balances accuracy and efficiency (such as backpropagation (BP) neural network, random forest, support vector machine, and the like) to avoid the inefficiency problem caused by full-parameter traversal. Using the preprocessed training set as input, operating condition feature parameters as the model input layer, and frequency-domain characteristic indicators such as admittance magnitude, phase, and resonance frequency as the model output layer, model training is performed, and model hyperparameters (such as the number of hidden layers and learning rate of the neural network, the number of decision trees of the random forest) are iteratively adjusted to minimize the model prediction error, ensuring that the model can accurately capture the correlation law between operating condition parameters and admittance frequency-domain characteristics.

Operation S1 further includes: S12, adopting mechanism modeling for passive devices in the power station to construct a mechanism model.

Specifically, passive devices include, but are not limited to, devices without active regulation of electrical energy parameters such as transmission lines and transformers. More specifically, for passive devices existing in the power station, mechanism modeling is adopted, i.e., based on the physical structure and electromagnetic characteristics of the devices, mathematical expressions that can accurately describe their admittance frequency response are established, and the frequency-domain characteristics of the components are accurately described using admittance parameters. For example, for transmission lines, the admittance parameters may include positive-sequence, negative-sequence, and zero-sequence parameters. For short line models, the capacitance to ground can be ignored; for medium and long lines, a Π-type equivalent circuit is used, considering the capacitance to ground; for long lines, a distributed parameter model is used, considering wave propagation effects. For transformers, a T-type equivalent circuit modeling is adopted to accurately reflect the primary side parameters, the secondary side parameters and excitation characteristics.

Operation S1 further includes: S13, based on the mapping model and the mechanism model, combining topological relationships, assembling and constructing the frequency-domain model of the power station.

Specifically, according to an actual situation of the power station to be predicted, the topological connection relationship of nodes in the power station is established, and the transmission characteristics, coupling effects, resonance frequency, attenuation law, and the like between nodes are described in the frequency domain (frequency dimension) to construct the frequency-domain model of the station to be predicted.

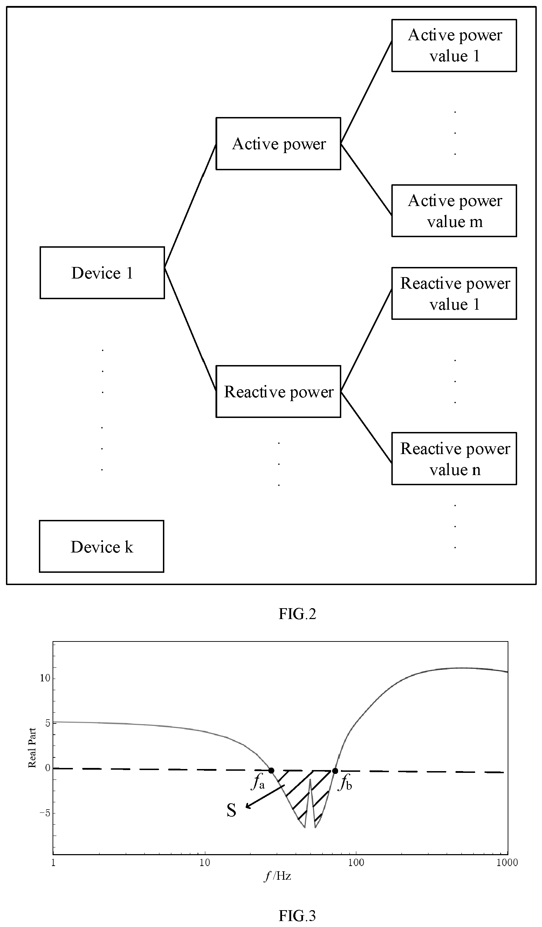

Preferably, to distinguish different operating conditions of the power station to be predicted, before oscillation prediction, according to the equipment contained in the power station and the operating condition parameters of each device, an operating condition code is set for each operating condition, so that during subsequent operating condition updates and processes, the correct operating condition code is output to correspond to the present operating condition. It is worth noting that this operating condition code is a unique identifier for each operating condition and can be in any identification form. As shown in FIG. 2, in a preferred embodiment, first, each power electronic device in the power station (including wind turbines, photovoltaics, energy storage, SVG, and the like) is divided, and then the internal operating condition parameters (active power, reactive power, and the like) of each device are divided. Encoding is used to encode all operating condition parameters of all devices to obtain a unique identifier for each operating condition, for example, the form of "device name" and "operating condition parameter" and "operating condition value" to form a unique operating condition combination code.

The method further includes S2, according to a negative damping level of each device in the admittance database and the frequency-domain model, selecting an operating condition having the highest negative damping level and being stable as a present initial operating condition.

Specifically, in operation S2, only two requirements are proposed for the selection of the present initial operating condition: the highest negative damping level and stability. In one embodiment, first, the negative damping level of each device is determined according to the admittance database, and then the operating conditions are arranged in a descending order according to the negative damping level of each device in the admittance database, and it is determined in turn whether the operating condition with the highest negative damping level is stable. If yes, the operating condition with the highest negative damping level is taken as the present initial operating condition. If no, that is, the operating condition with the highest damping level oscillates, then the operating condition with the second highest negative damping level is selected as the present operating condition, and stability determination is performed again... and so on. If it still oscillates, the operating condition with the third, fourth, etc. negative damping level is selected, and stability determination is performed again until an operating condition that satisfies the relatively higher negative damping level and is stable is found as the present initial operating condition. In another embodiment, stability determination is performed first for all operating conditions, and then the operating condition with the highest negative damping level is sought among the stable operating conditions. It can be seen that the key of operation S2 is to select the operating condition with the highest negative damping level and being stable as the present initial operating condition, and how to select it is not limited by the embodiments of the present invention.

Preferably, in operation S2, the negative damping level of each device, as shown in FIG. 3, may be represented by the negative damping interval area S of each device, that is, an area of the part where the real part curve Re(f) of the impedance is less than 0. The larger the area, the higher the negative damping level, and the smaller the area, the lower the negative damping level. According to the area of the negative damping interval, sorting is performed to determine the operating condition with the highest negative damping level and being stable as the present initial operating condition.

Preferably, operation S2 may also consider the influence coefficient of each device on the overall power station, comprehensively consider the negative damping level of each device in each operating condition, and weigh to determine the present initial operating condition. In a preferred embodiment, operation S2 includes:
S21: according to admittance data of each device in the admittance database, calculating a negative damping interval area of each device.

Specifically, as shown in FIG. 3, the part where the real part curve Re(f) of the impedance is less than 0 is the negative damping interval. Since the negative damping level is related to the negative damping frequency range and the numerical value which correspond to the negative damping level, the larger the negative damping interval area, the greater the negative damping level. Specifically, the negative damping interval area S, that is, the area of the part where the impedance real part curve Re(f) is less than 0, is calculated using the following formula: $S = - {\int }_{{f}_{a}}^{{f}_{b}} Re \left(f\right) df ;$ where (fₐ, f_{b}) is the negative damping interval, Re( f) is the real part curve; S is the negative damping interval area.

Operation S2 further includes: S22, according to the negative damping interval area of each device, integrating capacity weights of devices in the power station, and weighting to determine the negative damping level of each operating condition. The following formula is used to calculate: ${S}_{t} = \sum \left({k}_{i}\times {S}_{i}\right) ;$ where kᵢ is the capacity weight of the i-th device, which optionally is the ratio of the device capacity to the total capacity of the power station, i.e., the entire system. Sᵢ is the negative damping interval area of the i-th device. Sₜ is the negative damping level of the operating condition t.

Operation S2 further includes: S23, arranging the operating conditions in a descending order according to the negative damping level, determining whether the present operating condition is stable in order. If the present operating condition is stable, the present operating condition is taken as the present initial operating condition. If the present operating condition oscillates, the present operating condition is output as an oscillation operating condition, and in the descending order, the next operating condition after the present operating condition is updated to be the present operating condition, performing stability determination again, until the operating condition with the largest negative damping level and being stable is obtained as the present initial operating condition.

Specifically, according to the value of the operating condition negative damping level Sₜ, operating conditions are sorted in a descending order, and the operating condition with the largest Sₜ is first selected as the present operating condition. To distinguish operating conditions, the previously set operating condition code is used as a unique identifier instead of each operating condition. Under this operating condition code, stability analysis is performed on the frequency-domain model, for example, using the "generalized Nyquist criterion based on determinant" for frequency-domain stability analysis. If after the frequency-domain stability analysis, it is in a stable state, then this operating condition is taken as the present initial operating condition. If after analysis, it is in an oscillating state (unstable), then the oscillation operating condition code is output, and the next operating condition code (i.e., the second operating condition code in the descending order) is selected according to the order, and stability determination is performed again until the operating condition code firstly analyzed as stable is sought as the present initial operating condition.

The method further includes S3, based on the frequency-domain model, calculating an influence coefficient of each parameter of each device on the stability margin under the present initial operating condition, and determining a key parameter set according to the influence coefficients.

Specifically, assuming that all devices have a total of N operating condition parameters, under the present initial operating condition, the influence coefficient of each parameter of each device on the stability margin is calculated, and according to the influence coefficients, M parameters with large influence coefficients are selected from the N operating condition parameters to construct a key parameter set.

Preferably, in operation S3, the operation of calculating the influence coefficient of each parameter of each device on the stability margin includes:
S31: calculating a participation factor of each device in the power station under the present operating condition, determining a global weight of each device affecting the stability margin.

Specifically, based on the frequency-domain model, frequency-domain modal analysis is performed on the present device operating condition using the "generalized Nyquist criterion based on eigenvalue", and the stability margin and the participation factor of the power station under the present device operating condition, i.e., this operating condition combination code, are calculated. The participation factor is used to characterize the influence of each device on the stability margin, and the global weight of each device affecting the stability margin is determined, optionally wᵢ is the global weight of the i-th device. Preferably, the global weights are normalized so that a range of global weights is [0,1], and a sum of global weights of all devices is 1.

The operation of calculating the influence coefficient of each parameter of each device on the stability margin further includes S32, under the present operating condition, adjusting only a single parameter of a single device each time, determining a local weight of each parameter adjustment affecting the stability margin.

Specifically, only a single parameter of a single device is adjusted each time, and a variation of the stability margin before and after adjustment is used as the local weight of each parameter adjustment affecting the stability margin. Preferably, operation S32 includes:
S321: setting an adjustment step of a parameter, and respectively adjusting a single parameter of a single device according to the set adjustment step in both increase and decrease directions, keeping other parameters unchanged, to obtain a positively updated operating condition under an increase direction adjustment and a negatively updated operating condition under a decrease direction adjustment.

Operation S32 further includes S322, performing stability modal analysis on the positively updated operating condition and the negatively updated operating condition respectively, determining a stability margin of the positively updated operating condition and a stability margin of the negatively updated operating condition. Specifically, the stability margin may also be obtained by performing frequency-domain modal analysis using the "generalized Nyquist criterion based on eigenvalue".

Operation S32 further includes S323, according to a ratio of a difference between the stability margin of the positively updated operating condition and the stability margin of the negatively updated operating condition to twice the adjustment step, determining the local weight of each parameter.

Specifically, the local weight reflects the influence of each parameter on the stability margin near the present operating condition point, and may be calculated using the following formula: ${w}_{ij} = \left|\frac{\partial Y}{\partial A}\right| = \left|\frac{Y \left({A}_{ij}+ΔA\right) - Y \left({A}_{ij}-ΔA\right)}{2 ΔA}\right| ;$ where Aᵢⱼ is the j-th parameter of the i-th device, ΔA is the adjustment step, Y(Aᵢⱼ + ΔA) is the stability margin of the positively updated operating condition, Y(Aᵢⱼ - ΔA) is the stability margin of the negatively updated operating condition; wᵢⱼ is the local weight of the j-th parameter of the i-th device.

Specifically, taking the i-th device as an example, assuming that the number of internal operating condition parameters of the i-th device is 2, i.e., j=2. Specifically, *A*_{*i*1} is an active power P, *A*_{*i*2} is a reactive power Q, and the corresponding full operating condition range of the device is: the active power 0 - 1 p.u., the reactive power -0.3 - 0.3 p.u.; then, small-step adjustment is performed on the operating condition parameters P or Q, assuming that the adjustment step is set to ±ΔA=±0.05 p.u., and other parameters remain unchanged, then, the absolute value of the partial derivative of the operating condition parameter - the active power is calculated: ${w}_{iP} = \left|\frac{\partial Y}{\partial P}\right| = \left|\frac{Y \left(P+ΔA\right) - Y \left(P-ΔA\right)}{2 ΔA}\right| ;$
the absolute value of the partial derivative of the operating condition parameter - the reactive power is calculated: ${w}_{iQ} = \left|\frac{\partial Y}{\partial Q}\right| = \left|\frac{Y \left(Q+ΔA\right) - Y \left(Q-ΔA\right)}{2 ΔA}\right| ;$ where w_{iP} is the local weight of the active power of the i-th device, which may also be wᵢ₁; w_{iQ} is the local weight of the reactive power of the i-th device, which may also be wᵢ₂; Y(P + ΔA) is the stability margin of the positively updated operating condition with active power increased by ΔA; Y(P - ΔA) is the stability margin of the negatively updated operating condition with active power decreased by ΔA; Y(Q + ΔA) is the stability margin of the positively updated operating condition with reactive power increased by ΔA; Y(Q - ΔA) is the stability margin of the negatively updated operating condition with reactive power decreased by ΔA.

Preferably, operation S32 further includes normalizing the local weight wᵢⱼ so that the weight value range of the local weight is [0,1], and the sum of weights of the operating condition parameters under the same device is 1. ${w}_{ij}^{′} = \frac{{w}_{ij}}{{\sum }_{j = 0}^{{c}_{i}} {w}_{ij}} ;$ where wᵢ^{'}ⱼ is the normalized local weight of the j-th parameter of the i-th device; cᵢ is the number of parameters of the i-th device. For example, taking the number of the parameters of the i-th device being 2, i.e., active power P and reactive power Q: ${w}_{iP}^{′} = \frac{{w}_{iP}}{{w}_{iP} + {w}_{iQ}} ;$ ${w}_{iQ}^{′} = \frac{{w}_{iQ}}{{w}_{iP} + {w}_{iQ}} ;$ where w_{iP} is the local weight of the active power of the i-th device, w_{iQ} is the local weight of the reactive power of the i-th device, wᵢ^{'}_{P} is the normalized local weight of the active power of the i-th device, and wᵢ^{'}_{Q} is the normalized local weight of the reactive power of the i-th device.

More specifically, to prevent the adjustment step ΔA from being set unreasonably, too small to be effective, or too large causing large changes in the results, in operation S321, the operation of setting the adjustment step of the parameter includes:
S3211: according to the numerical adjustment range of each parameter, determining an adjustment step threshold for each parameter. Specifically, first, according to the numerical adjustment range of operating conditions of different parameters, the adjustment step is preferably not greater than 10% of the adjustment range length of each parameter. For example, the adjustment step threshold is set to 0.1.

The operation of setting the adjustment step of the parameter further includes S3212, according to the adjustment step threshold of each parameter, determining a first step and a second step for each parameter adjustment, where the second step is twice the first step, and the second step does not exceed the adjustment step threshold.

Specifically, the second step is selected as the maximum adjustment step threshold, i.e., 0.1; the first step is half of the second step, i.e., 0.05.

The operation of setting the adjustment step of the parameter further includes S3213, adjusting the corresponding parameter with the first step and the second step of each parameter respectively, and obtaining a stability margin change rate C₁ under the first step adjustment and a stability margin change rate C₂ under the second step adjustment. Specifically, C₁ and C₂ are calculated using the following formulas: ${C}_{1} = \frac{\frac{\left[Y\left({A}_{ij}+{ΔA}_{1}\right)-Y\left({A}_{ij}\right)\right]}{Y \left({A}_{ij}\right)}}{\frac{{ΔA}_{1}}{{A}_{ij}}} ;$ ${C}_{2} = \frac{\frac{\left[Y\left({A}_{ij}+{ΔA}_{2}\right)-Y\left({A}_{ij}\right)\right]}{Y \left({A}_{ij}\right)}}{\frac{{ΔA}_{2}}{{A}_{ij}}} ;$ where Y(Aᵢⱼ) is the stability margin when the operating condition is not adjusted, Y(Aᵢⱼ + ΔA₁) is the stability margin under the first step adjustment, ΔA₁ is the first step, Aᵢⱼ is the j-th parameter of the i-th device, Y(Aᵢⱼ + ΔA₂) is the stability margin under the second step adjustment, ΔA₂ is the second step.

The operation of setting the adjustment step of the parameter further includes S3214, determining whether a change between the stability margin change rate under the second step adjustment and the stability margin change rate under the first step adjustment is less than a set threshold. If yes, the first step is set as the adjustment step of the parameter. If no, operation S3212 is performed, and the first step and the second step for each parameter adjustment are re-determined in a decrease direction.

In this embodiment, a preferred embodiment of dynamically correcting the adjustment step is provided. First, the adjustment step threshold is determined, then the first step and the second step are determined, preferably ΔA₁ =0.05, ΔA₂ =0.1; then the stability margin change rate under each step adjustment (i.e., the stability margin sensitivity under step adjustment) is calculated respectively, and it is determined whether the change of the stability margin change rate under the adjustment of the first step and the second step (twice the first step) is less than a set threshold. Specifically, the change may be represented by, but not limited to, a difference between the stability margin change rate under the second step adjustment and the stability margin change rate under the first step adjustment, a difference between the ratio percentage and 100%, and the like. For example, the change is less than 5%, that is, the change is small, indicating that the present first step is reasonable, and this reasonable first step can be set as the adjustment step of the parameter. If the change of the stability margin change rate under the adjustment of the first step and the second step (twice the first step) is not less than the set threshold, it indicates that the first step selected is too large, and the value changes quickly, so the first step and the second step should be re-determined in a decrease direction, and the verification is repeated until the preset condition that the change of the change rate is within the set range is met.

More preferably, since a different setting of the adjustment step of the parameter may affect a value of the local weight to a certain extent, in order to obtain a more accurate and comprehensive local weight, operation S32 further includes:
S320: equally setting a plurality of adjustment steps between the first step and the second step. Under each set adjustment step, operations S321 - S323 are performed sequentially to obtain the local weight of each parameter under each adjustment step.

Taking the local weight of the j-th parameter of the i-th device as an example, under multiple set steps, operations S321-S323 are performed, a set ( ${w}_{ij}^{1} , { w}_{ij}^{2} . . {w}_{ij}^{d} . … {w}_{ij}^{D}$) is obtained, where D is the number of adjustment steps; wᵢ^{d}ⱼ is the local weight of the j-th parameter of the i-th device calculated under the d-th set adjustment step.

Operation S32 further includes S324, according to the local weight of each parameter under each adjustment step, weighting to determine a final local weight of each parameter.

In a preferred embodiment, the calculation formula for weighting to determine the final local weight of each parameter is: ${w}_{ij}^{"} = {\sum }_{d = 1}^{D} {w}_{ij}^{d} \times {α}_{ij}^{d} \times {β}_{ij}^{d} \times {γ}_{ij}^{d} ;$ ${α}_{ij}^{d} = \frac{{ΔA}_{ij}^{d}}{{\sum }_{d = 1}^{D} {ΔA}_{ij}^{d}} ;$ ${β}_{ij}^{d} = \frac{{ΔA}_{ij}^{max} - {ΔA}_{ij}^{d}}{{ΔA}_{ij}^{max} - {ΔA}_{ij}^{min}} ;$ ${γ}_{ij}^{d} = \frac{{w}_{ij}^{d}}{{\sum }_{d = 1}^{D} {w}_{ij}^{d}} ;$ where wᵢ^{'}ⱼ^{'} is the final local weight of the j-th parameter of the i-th device, wᵢ^{d}ⱼ is the local weight of the j-th parameter of the i-th device calculated under the d-th set adjustment step, αᵢ^{d}ⱼ is a basic coefficient of the d-th set adjustment step, βᵢ^{d}ⱼ is a safety coefficient of the d-th set adjustment step, γᵢ^{d}ⱼ is a contribution coefficient of the d-th set adjustment step, ΔA^{d}ᵢⱼ is the d-th adjustment step of the j-th parameter of the i-th device, ${ΔA}_{ij}^{max}$ is the maximum adjustment step of the j-th parameter of the i-th device, ${ΔA}_{ij}^{min}$ is the minimum adjustment step of the j-th parameter of the i-th device. The maximum adjustment step and the minimum adjustment step may be arbitrarily set according to the actual situation of the device.

The operation of calculating the influence coefficient of each parameter of each device on the stability margin further includes S33, according to the global weight of each device and the local weight of each parameter, calculating the influence coefficient of each parameter of each device on the stability margin, optionally by using the following formula: ${W}_{ij} = k \times {w}_{i} \times {w}_{ij} ;$ where Wᵢⱼ is the influence coefficient of the j-th parameter of the i-th device on the stability margin, which is comprehensively determined by the global weight of the device and the local weight of the parameter, comprehensively reflecting the contribution degree of this parameter to the change of the stability margin when adjusted. k is a weight balance adjustment coefficient, which dynamically corrects the influence weight ratio of wᵢ and wᵢⱼ, and a specific value of k is determined according to the actual situation, and k may also be deleted from the formula.

Preferably, in operation S3, the operation of determining the key parameter set according to the influence coefficients, a specific embodiment of selecting M candidate parameters with large influence coefficients from N operating condition parameters according to the influence coefficients in a descending order to construct a key parameter set has been provided previously, and the specific number of M may be set arbitrarily.

In a preferred embodiment, the operation of determining the key parameter set according to the influence coefficients includes:
S34: arranging the influence coefficients of each parameter of each device on the stability margin in the descending order, and calculating the sum of influence coefficients of all parameters of all devices as a global influence coefficient;
S35: selecting the first M' parameters to construct a preliminary key parameter set, and calculating the sum of influence coefficients of all parameters in the preliminary key parameter set as a local influence coefficient;
S36: determining whether the ratio of the local influence coefficient to the global influence coefficient exceeds a set threshold, if yes, taking the preliminary key parameter set as the final key parameter set; if no, updating M' to M'+1, and returning to operation S35.

In this embodiment, a preferred embodiment of how to determine the key parameter set according to the influence coefficients is provided. The value of the initial number M' and the set threshold of the ratio of the local influence coefficient to the global influence coefficient may be arbitrarily set according to the actual situation. The key of this embodiment is that, first, M' parameters are limited in number to construct a preliminary key parameter set; then, it is checked whether the quality of the M' parameters in the preliminary key parameter set is high, that is, whether the sum of the influence coefficients of these selected key parameters - the ratio of the local influence coefficient to the global influence coefficient exceeds a set threshold. If yes, it indicates that the selected key parameter set meets the standard; if no, it is necessary to additionally include parameters in the key parameter set, that is, select the first M'+1 parameters in the descending order to construct a new preliminary parameter set, and perform the ratio determination again until the first M parameters are selected. The general requirement is: assuming a total of N operating condition parameters, M must at least satisfy that the sum of the influence coefficients of the M high-weight operating condition parameters (the local influence coefficient) is higher than a certain proportion of the sum of the influence coefficients of all operating condition parameters (the global influence coefficient). This certain proportion, the set threshold of the ratio of the local influence coefficient to the global influence coefficient, may be arbitrarily set according to the specific situation of the renewable energy power station. For power stations with a relatively single type of renewable energy equipment, the preferred ratio is 85%~90%. For hybrid power stations (such as wind farms - photovoltaic plants - energy storage system, and the like), the preferred ratio is 90%~98%. If it is necessary to quickly find oscillation operating conditions while accepting a certain sacrifice in coverage, the ratio may be adjusted to 80%~85%.

The method further includes S4, for a respective key parameter in the key parameter set, calculating a system stability margin under different adjustment strategies applied to the respective key parameter to obtain candidate adjustment strategies with decreased stability margin. Among the candidate adjustment strategies, the adjustment strategy with the largest stability margin decline gradient is selected as the present adjustment strategy.

Specifically, in the key parameter set, there are many parameters, and each parameter has different adjustment directions (parameter increase/decrease) and adjustment steps. Then, the stability margin of each key parameter under different adjustment strategies is calculated in turn, and all adjustment strategies with decreased stability margin are constructed as candidate adjustment strategies. Among the candidate adjustment strategies, the adjustment strategy with the stability margin of the largest decrease gradient, i.e., the fastest decreasing trend, is selected as the present adjustment strategy. This is the simplest and most direct way.

However, due to the complex equipment and numerous parameters of the power station, each parameter has many adjustment directions and steps. If the different adjustment strategies of each key parameter are enumerated one by one and the stability margin under each adjustment strategy is calculated, the amount of calculation may be very large. Therefore, in a preferred embodiment, operation S4 specifically includes:
S41: performing small-step numerical adjustment on each key parameter in different adjustment directions, and calculating a corresponding stability margin variation, to construct a training data set.

Specifically, the small-step numerical adjustment is relative to the adjustment range of each key parameter, and is performed within about 5%-10% of the adjustment range of each key parameter to calculate the stability margin variation in a small range, rather than calculating all, to reduce the amount of calculation.

Operation S4 further includes S42, taking the numerical variation of each key parameter in the training data set as input and the stability margin variation as output, constructing a stability margin gradient prediction model to predict the stability margin decline gradient of each key parameter under different adjustment directions (parameter increase/decrease).

Operation S4 further includes S43, according to the prediction result, determining the adjustment strategy with the largest stability margin decline gradient as the present adjustment strategy.

Specifically, a gradient boosting regression tree, a fully connected neural network, and the like are used to construct a stability margin gradient prediction model. First, a large number of small-step numerical adjustments are performed on the operating condition parameters, the corresponding stability margin variations are calculated, a training data set is obtained, a preset stability margin gradient prediction model is trained, and a trained stability margin gradient prediction model is obtained. Then, the present adjustment strategy is input into the model to predict the stability margin decline gradient of each device parameter under different adjustment directions (parameter increase/decrease), and the adjustment strategy with the largest stability margin decline gradient (including which device, which parameter, the adjustment direction, the adjustment step) is selected as the optimal present adjustment strategy.

Preferably, the stability margin gradient prediction model includes: an input layer, a first hidden layer, a second hidden layer, a third hidden layer, and an output layer connected in sequence.

The input layer is configured to input the numerical variation of each device parameter in a candidate parameter set.

The first hidden layer is configured to focus on the mapping relationship between a single parameter variation and the stability margin variation, extract linear correlation features and nonlinear sensitivity features of the single parameter, to obtain original features.

The second hidden layer is configured to, according to the original features, mine synergistic gain and suppression effect of different key parameter adjustment combinations on the stability margin variation, and extract first-order interaction coupling features between parameters.

The third hidden layer is configured to fuse the original features and the first-order coupling features, expand the feature expression dimension, and extract high-order nonlinear coupling features between key parameters.

The output layer is configured to output the stability margin variation according to the high-order nonlinear coupling features.

More preferably, the stability margin gradient prediction model adopts a lightweight fully connected neural network (which is one type of Multi-Layer Perceptron (MLP)), each layer is connected in a fully connected manner, without convolution, pooling or attention mechanism modules, balancing model complexity and engineering real-time requirements.

The input layer includes neurons consistent in number with the number of key parameters contained in the key parameter set, a single neuron corresponds to the effective step variation of a single key parameter, and is configured to receive standardized parameter adjustment input and provide basic data for feature extraction.

The first hidden layer includes 24 Rectified Linear Unit (ReLU) activation function neurons, fully connected to all neurons of the input layer, and also fully connected to the neurons of the second hidden layer. The first hidden layer is configured with a Dropout layer (e.g., dropout rate is 0.15), and introduced with L1 regularization (e.g., coefficient is 1e-4), used to extract linear correlation features and nonlinear sensitivity features of a single parameter, focusing on the direct mapping law between the adjustment of the parameter itself and the stability margin change, suppressing sparse feature redundancy, providing high-quality original features for deep feature extraction.

The second hidden layer includes 16 LeakyReLU (which is a variant of ReLU) activation function neurons (e.g., negative slope is 0.01), fully connected to all neurons of the first hidden layer, and also fully connected to the neurons of the third hidden layer. The second hidden layer is equipped with a batch normalization (BN) layer, uses LeakyReLU activation function to capture weak interaction signals, and alleviates the gradient vanishing problem through the BN layer, ensuring feature distribution stability, to mine the synergistic gain and the suppression effect of different parameter adjustment combinations on the stability margin variation, extracting first-order interaction coupling features between parameters.

The third hidden layer includes 8 Gaussian Error Linear Unit (GELU) activation function neurons, fully connected to all neurons of the second hidden layer, and also fully connected to the neurons of the output layer. The third hidden layer is configured with a Dropout layer (e.g., dropout rate is 0.1), used to extract high-order nonlinear coupling features, fuses the basic features of the previous two layers and the first-order coupling features and expands the feature expression dimension, accurately fits the complex mapping relationship between the parameter adjustment and the stability margin variation through the characteristics of the Gaussian error linear unit, filter high-frequency noise interference, and at the same time complete feature dimension compression and core feature refinement, remove redundant feature information, output a refined feature set strongly related to the stability margin gradient, balance model complexity and prediction performance, and provide accurate feature input for the output layer.

The output layer includes 1 linear activation function neuron, fully connected to all neurons of the third hidden layer. A BN layer is connected in series at the front end to stabilize the output distribution, and finally outputs the stability margin variation corresponding to the adjustment combination.

More preferably, the model training adopts the AdamW (Adam with weight decay) optimizer (e.g., weight decay coefficient is 1e-3), the learning rate is adaptively adjusted by a cosine annealing strategy (e.g., initial rate is 1e-3, and minimum rate is 5e-4), the batch size is set to 32~64, the maximum number of training iterations is 800, combined with the early stopping method (e.g., training is stopped when the validation set loss does not decrease for 15 consecutive iterations) and gradient clipping (e.g., clipping threshold is 1.0), further improving the model generalization ability, prediction accuracy and training stability, ensuring that the single-sample prediction time is equal to or less than 10ms, meeting the real-time requirements of renewable energy power station grid-connected oscillation regulation.

The method further includes S5, according to the present adjustment strategy, continuously adjusting each parameter in the key parameter set with a certain step, determining whether each updated operating condition is stable. If yes, no processing is performed. If no, an oscillation operating condition is output, until a boundary of any key parameter is reached. Operation S4 is performed again, the present adjustment strategy is deleted from the candidate adjustment strategies, and the adjustment strategy with the largest stability margin decline gradient is reselected as the present adjustment strategy, until all candidate adjustment strategies are traversed.

Specifically, according to the present adjustment strategy, the operating condition parameters of each device in the power station is modified under the present initial operating condition to obtain a new operating condition code. The " generalized Nyquist criterion based on determinant " is used to perform frequency-domain stability analysis, the power station stability margin is calculated under the new operating condition, and whether the new operating condition is stable is determined. If yes, no processing is performed. If no, the present operating condition code is output as an oscillation operating condition. Since the operating condition parameters have boundaries, the operating conditions is continuously adjusted according to this strategy within the numerical limits, all oscillation operating condition codes are recorded, until the boundary of a certain parameter under this adjustment strategy is reached, indicating that this adjustment strategy has reached an end of adjustment and can no longer be adjusted according to this adjustment strategy. At this time, operation S4 is performed again, the present adjustment strategy is removed from the candidate adjustment strategies, and the strategy with the fastest decreased stability margin is re-obtained for iteration. Finally, all descending strategies are traversed. If there are recorded oscillation operating condition codes, all operating condition codes are output. If no oscillation operating condition is found, it is considered that the power station has no oscillation risk.

More preferably, the method further includes: outputting the oscillation operating condition code and recording the stability margin. When the station oscillates, it is possible to locate, according to the calculated weights, which operating condition parameter of which device in the power station has the greatest impact on the oscillation, and provide a stability enhancement scheme accordingly.

In summary, the embodiments of present invention provide a method for predicting grid-connected oscillation conditions of a power station based on frequency-domain stability analysis. By establishing an admittance database and an accurate station frequency-domain model, and screening the optimal initial operating condition in combination with negative damping characteristics, a problem of unreasonable initial operating condition selection and large prediction deviation in the existing technologies is solved at the source, achieving a significant improvement in the prediction accuracy of oscillation conditions and effectively avoiding power grid safety hazards caused by inaccurate prediction. By quantifying the influence coefficients of parameters on the stability margin to lock the key parameter set, drawbacks of low efficiency of full-parameter traversal and loss of information due to unweighted dimension reduction in the existing technologies are abandoned. While greatly reducing the computational load and improving prediction efficiency, the prediction accuracy is ensured to be unaffected, meeting actual needs of real-time prediction and rapid response in engineering sites, and significantly improving the engineering practicability of the solution.

Aiming at problems of incomplete oscillation condition coverage and prominent risk omission in the existing technologies, this solution simulates operating condition changes under different adjustment modes of key parameters by iteratively traversing all candidate adjustment strategies, comprehensively covering potential oscillation conditions under complex scenarios such as multi-equipment coordination, parameter fluctuations, and random weather changes, completely solving the challenges of omission of key risk scenarios, and providing all-round technical support for power grid safety control. At the same time, the solution can not only accurately output oscillation conditions, but also identify core parameters, key adjustment modes and parameter boundaries that cause oscillation, establishing a complete "oscillation result-operating condition parameter-influence mechanism" association chain, solving problems of incomplete prediction results and difficulty in locating the root causes of oscillations in the existing technologies, helping operation and maintenance personnel quickly formulate targeted prevention and control measures, fundamentally reducing the occurrence rate of oscillation events, and avoiding serious faults such as equipment overcurrent, overvoltage, disconnection and regional power grid blackouts.

In addition, based on frequency-domain stability analysis, this solution adapts to strong nonlinear characteristics, low inertia and weak damping of core equipment of renewable energy power stations, can effectively cope with complex grid-connected scenarios such as multi-equipment coordination, power grid load fluctuations, and random changes in weather factors, provides scientific basis for station grid-connected parameter optimization and stability control by predicting oscillation operating conditions in advance and quantifying the change law of stability margin, further improves the stability and controllability of grid-connected operation of renewable energy power stations, helps efficient utilization of renewable energy, and provides reliable technical support for clean and low-carbon transformation of new-type power systems.
1. The accuracy and reliability of oscillation operating condition prediction can be significantly improved, and the risk of misjudgment and omission can be reduced. This method first establishes an admittance database and constructs an accurate station frequency-domain model, takes the operating condition with the highest negative damping level and being stable as the initial operating condition, avoiding prediction deviations caused by unreasonable initial operating condition selection at the source. At the same time, by quantifying the influence coefficients of each device parameter on the stability margin, it accurately locks the key parameter set, and subsequently carries out adjustment strategy analysis and operating condition iteration based on the key parameters, ensuring that the prediction process revolves around the core of oscillation causes, so that the prediction results can truly reflect the actual oscillation evolution law during station grid connection, providing accurate data support for stable station operation.
2. Early prediction and accurate positioning of oscillation operating conditions can be achieved, and active prevention and control basis can be provided for stable control of station grid connection. This method does not need to wait for the actual occurrence of oscillation operating conditions. By traversing different adjustment strategies of key parameters, it simulates the dynamic change of stability margin during parameter change, and captures in advance the critical operating condition where the stability margin drops to the unstable range, that is, accurately outputs the oscillation condition. At the same time, by preferentially selecting the adjustment strategy with the largest stability margin decline gradient, it can quickly locate the parameter adjustment mode and the parameter boundary that are most likely to cause oscillation, clarify the key causes of oscillation, help technical personnel formulate targeted prevention and control measures in advance, avoid equipment damage, grid connection interruption and other safety accidents caused by oscillation expansion, and improve the safety of station grid-connected operation.
3. Prediction efficiency can be optimized, prediction costs can be reduced, and the engineering practicability of the method can be improved. This method screens key parameter sets through influence coefficients, avoiding blind traversal analysis of all device parameters, greatly reducing the amount of calculation in the prediction process and shortening the prediction cycle. At the same time, by adopting the layered logic of "initial operating condition optimization - key parameter screening - adjustment strategy iteration", it can complete oscillation operating condition prediction without complex field tests, effectively reducing the manpower and material costs of field tests. In addition, the method clarifies the boundary of parameter adjustment and the trigger conditions of oscillation operating conditions, the operation process is clear, it is easy to implement in engineering, and the method adapts to the grid-connected oscillation prediction needs of different types of power stations.
4. The stability and controllability of station grid-connected operation can be improved, and equipment service life can be extended. This method can comprehensively capture oscillation risks under different parameter adjustment modes by comprehensively traversing candidate adjustment strategies, avoiding potential oscillation hazards caused by omission of key adjustment strategies. At the same time, by predicting oscillation operating conditions in advance, technical personnel can optimize parameter adjustment schemes in advance, reasonably control an adjustment range and an adjustment speed of key parameters, reduce the impact of oscillation on power station equipment, reduce the equipment failure rate, and extend equipment service life. In addition, based on frequency-domain stability analysis, the method can accurately quantify the change law of the stability margin, providing scientific basis for stability control and parameter optimization after power station grid connection, further improving the controllability and the stability of station grid-connected operation.
5. Multi-operating condition, multi-equipment power station grid-connected scenarios can be adapted to, with strong versatility. This method first constructs an admittance database, covering the admittance parameters and the negative damping characteristics of each device of the power station, and can adapt to power stations with different device compositions and different grid-connected conditions. At the same time, by iteratively updating adjustment strategies and operating condition parameters, it can comprehensively cover oscillation operating conditions under different parameter combinations, without requiring a large number of adaptability modifications for specific power stations, greatly improving the versatility and applicability of the method, and can be widely used in the grid-connected oscillation prediction work of various renewable energy power stations and comprehensive energy power stations.

Beneficial effects brought by the preferred solution:
1. Modeling accuracy is significantly improved, and stability analysis is more reliable. The present invention adopts data-driven modeling for power electronic devices to construct a "operating condition - admittance" mapping model, accurately fitting the frequency-domain characteristics of power electronic devices, and adopts mechanism modeling for passive devices such as transmission lines and transformers to ensure the accuracy of admittance characteristics. This fusion method of "data-driven and mechanism modeling" avoids the simplification error of complex control characteristics by single mechanism modeling, and solves the problem of lack of physical constraints in single data-driven modeling, providing high-precision basic data for subsequent stability analysis.
2. Prediction efficiency is greatly improved, avoiding the curse of dimensionality. The present invention quantifies the comprehensive influence weight of operating condition parameters through global and local sensitivity analysis, reducing high-dimensional operating condition parameters (such as 20 wind turbines and 1 SVG, a total of 42 parameters) to 3 to 8 core candidate parameters, avoiding the exponential increase in computational load caused by full-parameter traversal. At the same time, based on the gradient prediction model to locate the strategy with the fastest stability margin decline, the number of oscillation condition search iterations is reduced, the training time is greatly shortened, solving the challenges of "low optimization efficiency, difficult to apply in real time" of traditional methods, and meeting the real-time requirements of engineering scheduling.
3. Full coverage of oscillation risks, no omission of key operating conditions. The present invention ensures that the optimization starts from the core risk area by scientifically selecting the high-risk initial operating condition with "maximum negative damping effect"; combined with strategy traversal, it achieves full coverage of all potential oscillation operating conditions within the operating condition limits. Compared with traditional random optimization methods, this solution can accurately capture the oscillation scene corresponding to the "critical combination of high-weight parameters", avoid omission of key oscillation operating conditions, and at the same time filter out invalid combinations of low-weight parameters, improving the pertinence of risk assessment.
4. Wide adaptability, compatible with multiple types of renewable energy power stations. The operating condition encoding method of the present invention can accurately identify any operating condition combination, facilitating rapid analysis of equipment operation status and standardized data management. The modeling method and the optimization logic do not depend on specific renewable energy device types, and can flexibly adapt to complex power stations containing multiple equipment such as wind turbines, photovoltaics, energy storage, SVG, and the like; the influence proportion of global and local weights can be dynamically balanced; it can be flexibly adjusted according to the scale of the power station, solving the problem of "poor adaptability, difficult to promote" of traditional methods, and is suitable for the grid-connected stability analysis of renewable energy power stations with different capacities and different equipment combinations.

In another aspect, the embodiments of the present invention further provide a computer storage medium storing executable program code; the executable program code is configured to perform any of the above methods for predicting grid-connected oscillation conditions of a power station.

In another aspect, the embodiments of the present invention further provide a computer system, including a memory and a processor. The memory stores program code executable by the processor. The program code is configured to perform any of the above methods for predicting grid-connected oscillation conditions of a power station based on frequency-domain stability analysis.

Exemplarily, the program code may be divided into one or more modules/units, and the one or more modules/units are stored in the memory and executed by the processor to complete the present invention. The one or more modules/units may be a series of computer program instruction segments capable of completing specific functions, and the instruction segments are used to describe the execution process of the program code in the computer system.

The computer system may be a desktop computer, a notebook, a palmtop computer, a cloud server, and other computing devices. The computer system may include, but is not limited to, a processor and a memory. Those skilled in the art may understand that the computer system may also include input and output devices, network access devices, buses, and the like.

The processor may be a Central Processing Unit (CPU), or other general-purpose processors, a Digital Signal Processor (DSP), an Application Specific Integrated Circuit (ASIC), a Field-Programmable Gate Array (FPGA), or other programmable logic devices, discrete gate or transistor logic devices, discrete hardware components, and the like. A general-purpose processor may be a microprocessor or the processor may also be any conventional processor, and the like.

The memory may be an internal storage unit of the computer system, such as a hard disk or memory. The memory may also be an external storage device of the computer system, such as a plug-in hard disk, a Smart Media Card (SMC), a Secure Digital (SD) card, a flash card, etc. equipped on the computer system. Further, the memory may also include both an internal storage unit of the computer system and an external storage device. The memory is used to store the program code and other programs and data required by the computer system. The memory may also be used to temporarily store data that has been output or will be output.

The above computer storage medium and the computer system are created based on the above method for predicting grid-connected oscillation conditions of a power station, and the technical effects and the beneficial effects are not repeated here. The technical features of the above embodiments can be combined arbitrarily. To make the description concise, not all possible combinations of the technical features in the above embodiments are described. However, as long as there is no contradiction in the combination of these technical features, they should be considered as falling within the scope of this specification.

The above embodiments only express several implementation modes of the present invention, and the description thereof is relatively specific and detailed, but it should not be construed as a limitation on the scope of the invention patent. It should be pointed out that for those of ordinary skill in the art, several modifications and improvements can be made without departing from the concept of the present invention, and these all fall within the protection scope of the present invention. Therefore, the protection scope of the invention patent shall be subject to the appended claims.

## Claims

1. A method for predicting grid-connected oscillation conditions of a power station based on frequency-domain stability analysis, comprising:
S1: establishing an admittance database and constructing a frequency-domain model of the power station; wherein the admittance database is configured to record a negative damping level of each device in the power station;
S2: according to the negative damping level of each device in the admittance database and the frequency-domain model, selecting an operating condition having the highest negative damping level and being stable as a present initial operating condition;
S3: based on the frequency-domain model, calculating an influence coefficient of each parameter of each device on a stability margin under the present initial operating condition, and determining a key parameter set according to the influence coefficients;
S4: comprising:
S41: performing a small-step numerical adjustment on each key parameter in different adjustment directions, and calculating a corresponding stability margin variation, to construct a training data set;
S42: taking a numerical variation of each key parameter in the training data set as input and the stability margin variation as output, and constructing a stability margin gradient prediction model to predict a stability margin decline gradient of each key parameter under different adjustment directions;
S43: according to a prediction result, determining an adjustment strategy with the largest stability margin decline gradient as a present adjustment strategy;
S5: according to the present adjustment strategy, continuously adjusting each parameter in the key parameter set with an adjustment step, determining whether an updated operating condition is stable, performing no processing in response to the updated operating condition being stable, and outputting an oscillation operating condition in response to the updated operating condition being unstable, until a boundary of any key parameter is reached; deleting the present adjustment strategy from candidate adjustment strategies, returning to operation S4 to reselect the adjustment strategy with the largest stability margin decline gradient as the present adjustment strategy, until all candidate adjustment strategies are traversed.

2. The method according to claim 1, wherein operation S2 comprises:
S21: according to admittance data of each device in the admittance database, calculating a negative damping interval area of each device;
S22: according to the negative damping interval area of each device, integrating capacity weights of devices in the power station, and weighting to determine the negative damping level of each operating condition; and
S23: arranging the operating conditions in a descending order according to the negative damping level of the operating conditions, determining whether the present operating condition is stable in order, taking the present operating condition as the present initial operating condition in response to the present operating condition being stable; outputting the present operating condition as an oscillation operating condition in response to the present operating condition being unstable, and in the descending order, setting a next operating condition after the present operating condition as the present operating condition, performing stability determination again, until the operating condition with the largest negative damping level and being stable is obtained as the present initial operating condition.

3. The method according to claim 1, wherein calculating the influence coefficient of each parameter of each device on the stability margin comprises:
S31: calculating a participation factor of each device in the power station under the present operating condition, and determining a global weight of each device affecting the stability margin;
S32: under the present operating condition, adjusting only a single parameter of a single device each time, and determining a local weight of each parameter adjustment affecting the stability margin; and
S33: according to the global weight of each device and the local weight of each parameter, calculating the influence coefficient of each parameter of each device on the stability margin.

4. The method according to claim 3, wherein operation S32 comprises:
S321: setting an adjustment step of a parameter, and respectively adjusting a single parameter of a single device according to the set adjustment step in both increase and decrease directions, and keeping other parameters unchanged, to obtain a positively updated operating condition under an increase direction adjustment and a negatively updated operating condition under a decrease direction adjustment;
S322: performing stability modal analysis on the positively updated operating condition and the negatively updated operating condition respectively, and determining a stability margin of the positively updated operating condition and a stability margin of the negatively updated operating condition; and
S323: according to a ratio of a difference between the stability margin of the positively updated operating condition and the stability margin of the negatively updated operating condition to twice the adjustment step, determining the local weight of each parameter adjustment affecting the stability margin.

5. The method according to claim 4, wherein setting the adjustment step of the parameter comprises:
S3211: according to a numerical adjustment range of each parameter, determining an adjustment step threshold for each parameter;
S3212: according to the adjustment step threshold of each parameter, determining a first step and a second step for each parameter adjustment; wherein the second step is twice the first step, and the second step does not exceed the adjustment step threshold;
S3213: adjusting a corresponding parameter with the first step and the second step of each parameter respectively, and obtaining a stability margin change rate under the first step adjustment and a stability margin change rate under the second step adjustment;
S3214: determining whether a change between the stability margin change rate under the second step adjustment and the stability margin change rate under the first step adjustment is less than a set threshold, setting the first step as the adjustment step of the parameter in response to the change being less than the set threshold, and in response to the change being equal to or greater than the set threshold, returning to operation S3212, and re-determining the first step and the second step for each parameter adjustment in a decrease direction.

6. The method according to claim 4, wherein operation S32 further comprises:
S320: equally setting a plurality of adjustment steps between the first step and the second step, and under each set adjustment step, sequentially performing operations S321-S323 to obtain the local weight of each parameter under each adjustment step; and
S324: according to the local weight of each parameter under each adjustment step, weighting to determine a final local weight of each parameter.

7. The method according to claim 6, wherein weighting is performed to determine the final local weight of each parameter according to the following calculation formula: ${w}_{ij}^{"} = {\sum }_{d = 1}^{D} {w}_{ij}^{d} \times {α}_{ij}^{d} \times {β}_{ij}^{d} \times {γ}_{ij}^{d} ;$ ${α}_{ij}^{d} = \frac{{ΔA}_{ij}^{d}}{{\sum }_{d = 1}^{D} {ΔA}_{ij}^{d}} ;$ ${β}_{ij}^{d} = \frac{{ΔA}_{ij}^{max} - {ΔA}_{ij}^{d}}{{ΔA}_{ij}^{max} - {ΔA}_{ij}^{min}} ;$ ${γ}_{ij}^{d} = \frac{{w}_{ij}^{d}}{{\sum }_{d = 1}^{D} {w}_{ij}^{d}} ;$ wherein wᵢ^{'}ⱼ^{'} is the final local weight of the j-th parameter of the i-th device, wᵢ^{d}ⱼ is the local weight of the j-th parameter of the i-th device calculated under the d-th set adjustment step, αᵢ^{d}ⱼ is a basic coefficient of the d-th set adjustment step, βᵢ^{d}ⱼ is a safety coefficient of the d-th set adjustment step, γᵢ^{d}ⱼ is a contribution coefficient of the d-th set adjustment step, ΔA^{d}ᵢⱼ is the d-th adjustment step of the j-th parameter of the i-th device, ${ΔA}_{ij}^{max}$ is the maximum adjustment step of the j-th parameter of the i-th device, and ${ΔA}_{ij}^{min}$ is the minimum adjustment step of the j-th parameter of the i-th device.

8. The method according to claim 1, wherein determining the key parameter set according to the influence coefficients comprises:
S34: arranging the influence coefficients of each parameter of each device on the stability margin in a descending order, and calculating a sum of influence coefficients of all parameters of all devices as a global influence coefficient;
S35: selecting the first M' parameters to construct a preliminary key parameter set, and calculating the sum of influence coefficients of all parameters in the preliminary key parameter set as a local influence coefficient; and
S36: determining whether a ratio of the local influence coefficient to the global influence coefficient exceeds a set threshold, taking the preliminary key parameter set as the final key parameter set in response to the ratio exceeding the set threshold, and in response to the ratio not exceeding the set threshold, updating M' to M'+1, and returning to operation S35.

9. The method according to any one of claims 1 to 8, wherein the stability margin gradient prediction model comprises: an input layer, a first hidden layer, a second hidden layer, a third hidden layer, and an output layer connected in sequence;
the input layer is configured to input a numerical variation of each device parameter in a candidate parameter set;
the first hidden layer is configured to focus on a mapping relationship between a single parameter variation and the stability margin variation, and extract linear correlation features and nonlinear sensitivity features of the single parameter, to obtain original features;
the second hidden layer is configured to, according to the original features, mine synergistic gain and suppression effect of different key parameter adjustment combinations on the stability margin variation, and extract first-order interaction coupling features between parameters;
the third hidden layer is configured to fuse the original features and the first-order coupling features, expand feature expression dimension, and extract high-order nonlinear coupling features between key parameters;
the output layer is configured to output the stability margin variation according to the high-order nonlinear coupling features.

10. The method according to any one of claims 1 to 9, wherein establishing the admittance database comprises:
S11: for power electronic devices in the power station, performing multi-condition sweep frequency tests to obtain admittance data under various operating conditions, and establishing the admittance database, to construct a "operating condition - admittance" mapping model.

11. The method according to claim 10, wherein operation S11 comprises:
for the power electronic devices in the power station, adopting a data-driven modeling form, performing frequency sweep on the power electronic devices under typical operating conditions, obtaining the admittance data under the typical operating conditions, and establishing the admittance database; and
according to the admittance database, constructing the "operating condition - admittance" mapping model with operating condition parameters and frequency as inputs and admittance magnitude and admittance phase as outputs.

12. The method according to claim 10 or claim 11, wherein the admittance data comprises positive sequence admittance, positive sequence coupled admittance, negative sequence admittance, and negative sequence coupled admittance.

13. The method according to any one of claims 10 to 12, wherein constructing the station frequency-domain model comprises:
adopting mechanism modeling for passive devices in the power station to construct a mechanism model; and
based on the mapping model and the mechanism model, combining topological relationships, assembling and constructing the frequency-domain model of the power station.

14. A computer storage medium for storing executable program code; the executable program code is configured to implement the method according to any one of claims 1 to 13.

15. A computer system, comprising a memory and a processor; the memory stores program code executable by the processor; the program code is configured to implement the method according to any one of claims 1 to 13.
